Europäisches Patentamt

European Patent Office

Office européen des brevets

(11) Publication number: **0 076 880**
**B1**

(12) **EUROPEAN PATENT SPECIFICATION**

(45) Date of publication of patent specification: **03.07.85**

(51) Int. Cl.⁴: **H 04 L 11/16**

(21) Application number: **81304559.8**

(22) Date of filing: **01.10.81**

(54) **A local area contention network data communication system.**

(43) Date of publication of application:
**20.04.83 Bulletin 83/16**

(45) Publication of the grant of the patent:
**03.07.85 Bulletin 85/27**

(84) Designated Contracting States:
**BE DE FR GB IT NL**

(56) References cited:
**FR-A-2 203 237**
**GB-A-2 006 491**

**3RD USA-JAPAN COMPUTER CONFERENCE
PROCEEDINGS, 10th-12thOctober 1978, San
Francisco, AFIPS & IPSJ, Baltimore (USA); G.S.
CHRISTENSEN et al.: "Design and analysis of
the access protocol for hyperchannel
networks". Pages 86 to 93**

(73) Proprietor: **BURROUGHS CORPORATION (a
Michigan corporation)
Burroughs Place
Detroit, Michigan 48232 (US)**

(72) Inventor: **Malcolm, Michael A.
296 Craigleith Drive
Waterloo Ontario N2L 5B3 (CA)**
Inventor: **Gerhold, Mark L.C.
15 East Golf Club Lane
Paoli Pennsylvania 19301 (US)**
Inventor: **Hodgman, Gary W.
5790 Independence Lane
West Bloomfield Michigan 48033 (US)**
Inventor: **Parker, Marshall M.
4166 Taos Drive
San Diego California 92117 (US)**
Inventor: **Spracklen, John E.
2560 Arnott Street
San Diego California 92110 (US)**
Inventor: **Rogers, Lawrance D.
13644 Boquita Drive
Del Mar California 92014 (US)**

(74) Representative: **Kirby, Harold Douglas Benson
et al
G.F. Redfern & Company Marlborough Lodge 14
Farncombe Road
Worthing West Sussex BN11 2BT (GB)**

Courier Press, Leamington Spa, England.

## Description

### Field of invention

This invention relates to a network of data stations and more particularly to such a network wherein control of the transmission between stations is shared by the respective stations.

### Description of the prior art

Prior art terminal networks usually have been controlled by a master computer which receives transmission requests from the respective stations and grants access to a transmission channel by the individual station when the channel is available and according to some priority arrangement. Such master computers add to the cost of the station network and are not required for some networks where the stations need communicate only between themselves or with a common storage file. Thus, it is desirable to have a station network where the transmission control is embedded in or shared by the stations making up that network.

Prior art networks not having a master controller, have employed "contention" schemes whereby each station of the network contends for the transmission medium whenever it is ready to transmit. One of the earliest contention networks was the "Aloha" system built by the University of Hawaii. In this system, each station transmitted whenever it had a packet ready for transmission. Whenever a portion of one station's transmission overlapped with another station's transmission, that overlap destroyed both packets. If the sending station did not receive an acknowledgement within another packet from the destination station after an arbitrary time period, it would assume that a collision had occurred and retransmit. In order to avoid continuously repeated collisions, some method of introducing a random retransmission delay had to be introduced.

An attempt at reducing the effects of collision in contention-type networks is disclosed in the Metcalfe et al. Patent No. US—A—4,063,220 which is directed toward a communication network in which each station is capable of detecting when collision occurs on the channel during that station's transmission and interrupts its transmission when such a collision occurs. A random number generator is employed to select an interval of time to delay before the next attempt at transmission. However, the collision detection mechanism adds to the complexity of the respective stations with an increase in the cost of the system. For certain types of transmission media, collision detection is very difficult, if not impossible to implement.

United Kingdom Patent Application 2,006,491A discloses a plural station contention network wherein a plurality of stations contend for a common data channel. Each station comprises a transmitter unit which listens to the channel and is inhibited from transmitting if it detects signals on the channel. At the termination of activity on the channel each transmitter unit comprises a random timer which waits for a fixed delay and adds thereon a random interval. At the end of the timing operation, each transmitter unit attempts to access the communication channel. Whichever transmitter unit is first gets the channel. Other transmitter units coming thereafter detect activity on the channel and are inhibited. In United Kingdom Patent Application 2,006,491A the random timing for the transmitter unit at each station is achieved by using a clock oscillator having random drift in frequency and wide component tolerances. Thus, the transmitter unit at any one station will not have the same delay as the transmitter unit at any other. Further, the random delay will change slowly with time. This system has the disadvantage that dependent upon the particular components in the delay unit at any transmitter unit a particular station will always appear early or late in the sequence of contention for the data channel. Thus, some stations will be more favoured than others dependent upon the speed of their operator circuit. Further, since frequency drift is encouraged in the oscillator, change of position in the order of contention for each station will be slow and equal proportional drifts will still maintain some stations permanently late in the order of contention and some stations permanently early. In the present application, United Kingdom Application 2,006,491A is considered the closest art. The present invention seeks to improve over the contention network disclosed in United Kingdom Application 2,006,491A by ensuring that no one station in a contention network enjoys any kind of permanent advantage in the order of contention over any other.

In a paper presented in the third USA—Japan Computer Conference 1978 having the title "Design and Analysis of the Access Protocol for HYPERchannel Networks" Christensen and Franta disclose various contention protocols whereby a plurality of stations may use a common data communication channel. In particular, the authors describe the HYPERchannel system wherein any transmitter in the contention system waits for a fixed delay after detection of cessation of activity on the channel before each station can gain access to the channel on a predetermined priority basis, each in its own time slot. If no station seizes control of the channel during this time, the network goes into contention mode where each station has an equal chance of capturing the channel by being the first to provide a data signal on the channel. Any collision between two stations wishing to transmit on the channel are prevented by the use of control messages which contend for the channel and hold the channel for an ensuing data packet transfer period. The present invention seeks to provide improvement over the HYPERchannel system by automatically providing for the prevention of data collisions without the need for special control messages on the data channel.

French Patent 2,203,237 discloses a system wherein a plurality of subscribers may wish simultaneous access to a common communication channel. Each subscribing transmitter is given a different delay period between detection of cessation of activity on the channel and attempting to transmit. If another subscribing transmitter should gain access to the channel a state of activity is detected on the channel and all other subscribing transmitters inhibited. A different random delay is given to each transmitter in the network. In an alternative embodiment, in French Patent 2,203,237, a random time generator is used in each transmitter to determine the instant whereat it attempts to transmit on the channel after any previous cessation of activity thereon. The random generator consists in a dividing chain of flip-flops which can be clocked with the data to be transmitted or can be clocked by an oscillator of wide frequency tolerance and instability. The present invention seeks to improve over the disclosure of French Patent 2,203,237 by providing a contention network wherein random time delays before transmitter access to the common channel are provided for fixed length messages and wherein the disadvantages already raised concerning the disclosure of United Kingdom Patent Application 2,006,491A which also uses an oscillator of unstable frequency are overcome.

It is, then, an object of the present invention to provide an improved data communication network which does not require a master controller to synchronize data transmissions on a common bus or channel.

It is another object of the present invention to provide an asynchronous data communication network wherein each station contends for access to a channel medium in a manner such as to minimize conflicts between the respective stations without requiring transmitting stations to be capable of detecting collisions.

It is still another object of the present invention to provide a contention network data communication system wherein the respective stations contend for access to the channel in a cyclic fashion with synchronization between the states of each station.

It is still a further object of the present invention to provide a contention network data communication system wherein an acknowledgement signal is received (or not received) by the transmitting station, within a predetermined period of time after transmission.

Summary of the invention

The present invention consists in a data communication network comprising a plurality of stations in contention for a common communication channel each to transmit a respective data packet, each of said plurality of stations being operable to monitor said channel for activity, to be inhibited from transmission of said respective data packet when said channel is active, upon detection of cessation of activity on said channel to delay for a randomly selected time period (s) before attempting to transmit said respective data packet on said channel and to be inhibited from attempting to transmit said respective data packet on said channel if said channel should become active before the elapse of said randomly selected time period (s), said network being characterized by said each station, on each instance of detection of cessation of activity on said channel, being operable to select a different value for said randomly selected time period (s) uniformly distributed over a predetermined range (O to S) for each of said plurality of stations in said network to have, on average, an equiprobable chance to be the first station to gain access to said channel after detection of cessation of activity thereon.

In order to achieve the above identified objects, the present invention is directed toward a station for a data transmission network which is adapted to operate in a cyclic mode for contending for access to the network channel along with other stations of the network. The three states of the cycle are the idle state, the packet-being-transmitted state and the acknowledgement period state. Each station will not begin transmission until it determines that the channel is in an idle state. Once the station has determined that the channel is idle, it will then delay for a period of time that is randomly chosen and, if the channel is still idle, will then begin transmission. Following transmission, the channel will again be quiescent for a short period of time before the acknowledgement signal is transmitted from the receiver. Each packet of data to be transmitted is of a fixed length so as to provide for synchronization between the various stations contending for access to the channel.

A feature then of the present invention resides in a station for a data transmission network which station is adapted to contend for access to the network channel. Once the station had determined that the channel is idle, it will then delay for a period of time that is randomly chosen and, if the channel is still idle, will then begin transmission.

Another feature of the present invention is the provision of an acknowledgement signal within a predetermined duration of time after each transmission.

Description of the drawings

The above, and other objects, advantages and features of the present invention will become more readily apparent from a review of the following specification wherein:

Figures 1A and 1B are representations of different networks employing the present invention;

Figure 2 is a diagram of an information packet employed in the present invention;

Figures 3A and 3B are flow charts illustrating, respectively, the channel state machine and the transmission method of the present invention;

Figures 4A, 4B and 4C are schematic diagrams illustrating the terminal interface of the present invention; and

Figure 5 is a representation of signals in Manchester Code as employed in the present invention.

General description of the invention

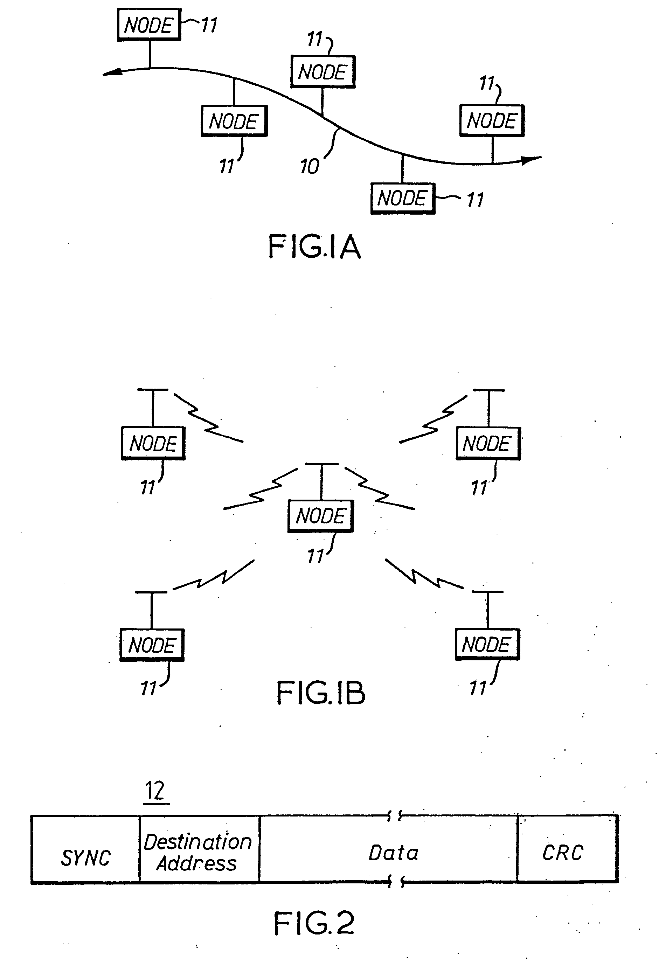

The present invention is directed toward an interface which is used to connect stations 11 into a local area communication network. The network uses a shared communication channel 10 and distributed control. There is no central arbitrator of channel 10 utilization. The shared communication medium can be a twisted pair, a coaxial cable, fiber optics, and so forth, as illustrated in Figure 1A, or the network may employ radio communication such as illustrated in Figure 1B. In either case, each station 11 is located at a node in the network. In the case of radio communication each station 11 has its own transmitter receiver and antenna.

The data structure employed is illustrated in Figure 2 and is a fixed-sized packet 12 which contains a fixed number of data bits along with the information necessary for interface synchronization, message routing and error detection. As illustrated in Figure 2, the first field of the packet 12 is the SYNC code which is a four bit field that indicates that information follows and serves to synchronize the receiving node for reception of the information packet which follows. The second field is the Destination Address code which is 16 bits long and designates the stations for which the message is destined. The Data Field consists of 132 8-bit bytes. The last field is the cyclic redundancy check (CRC) code which contains a 16-bit error detection code. A new CRC code is generated by the station 11 during packet 12 reception and checked against the transmitted CRC code. Other means of error detection are also employed.

As was indicated above, the present invention is directed toward a contention network. That is to say, each station of the network transmits packets 12 independently of the other stations 11, possibly interfering or colliding with other transmissions. If the transmitted packet 12 is received correctly by the destination station 11, then the receiver responds with an acknowledgement signal. If the acknowledgement signal is not received by the transmitting station 11 during the acknowledgement period immediately following the packet 12 transmission, then the transmitter assumes that the transmission was unsuccessful.

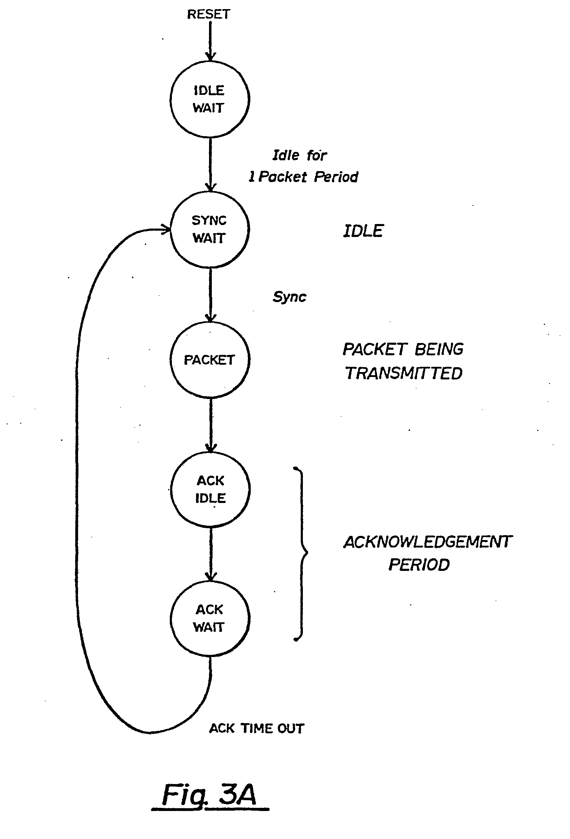

The channel state machine for each node in the present invention is illustrated in Figure 3A. As indicated therein, the network channel 10 cycles sequentially through three states: idle, packet-being-transmitted and acknowledgement period.

Each station continually monitors the channel 10 and keeps track of its state. Because there is a propagation delay for the signal, the exact times of transitions between the states vary from point to point along the network, but they are all synchronized within a fixed time interval.

The specific cycle of the channel state machine will now be described with relation to Figure 3A. Upon reset or power up, the channel state machine enters the SYNC WAIT state after the channel 10 has been quiescent for at least one packet transmission period. Upon detection of any data on the channel (e.g., the SYNC code of the packet), the channel state machine enters the PACKET state which lasts a fixed amount of time. After the PACKET state, the channel state machine enters the ACK IDLE state followed by the ACK WAIT state, each of fixed duration. After the ACK WAIT state, the channel state machine returns to the SYNC WAIT state.

As described in Figure 3A, the states of the channel state machine corresponds to the network channel 10 states as follows: The channel state machine is in the SYNC WAIT state whenever the channel 10 is in the idle state, the PACKET state whenever the channel 10 is in packet-being-transmitted state, and ACK IDLE or ACK WAIT state whenever the channel 10 is in the acknowledgement period state. The channel should be quiescent during the ACK IDLE state of the channel state machine; if it is not, (i.e., if any channel activity is detected during the ACK IDLE state) it is considered an error in the present transmission, even if an ACK signal appears on the channel 10 during the subsequent ACK WAIT state.

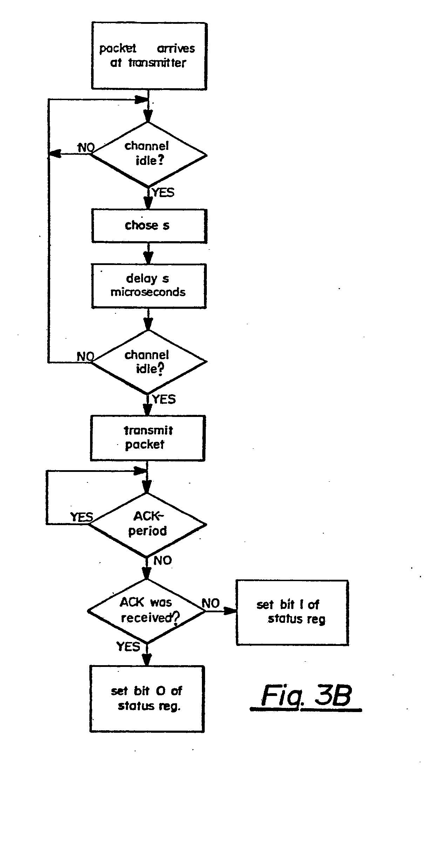

When a packet 12 to be transmitted is loaded into the interface of a particular station 11, that interface operates in a manner that will now be described in relation to Figure 3B.

Step 1. Upon arrival of a packet to be transmitted, the interface checks to see if the channel is idle. If the channel is either in the packet-being-transmitted state or the acknowledgement state, then the transmitter waits until the channel becomes idle.

Step 2. An integer s is chosen randomly in the interval (O, S) with each of the S+1 possible choices being equally probable. The transmitter then delays for s microseconds. If the channel 10 is still idle at the end of the delay, then the packet 12 is transmitted. If at that time the channel 10 is not idle, then the transmitter goes back to Step 1.

Step 3. The transmitter waits for the acknowledgement period to complete. It then sets the interface status register 22 according to whether or not an acknowledgement signal was received during the acknowledgement period. The setting of the status register 22 causes an interrupt request of the resident computer.

The choice of S is somewhat arbitrary depending upon the transmission speed and packet length. In the present invention, a value of about $10^8$ divided by the channel 10 baud rate should perform well over a wide range of packet 12 loads. An important parameter is the propagation delay time t from one end of the network to the other, which is used in determining the duration of the acknowledgement period. For a five thousand foot cable medium, the propagation delay time t is approximately 8 microseconds. When the transmitter and receiver are at opposite ends of the network, the last bit transmitted requires t microseconds to arrive at the receiver. The receiver then delays for a period of 2t before transmitting the acknowledgement signal. The acknowledgement signal takes another t microseconds to arrive at the transmitter node. After transmitting the acknowledgement signal, the receiver sets the interface status register to indicate that a packet has been received. The setting of the status register 22 causes an interrupt request of the resident computer.

With a network of stations as described above, the PACKET state of the channel state machine for each station 11 will always be of fixed duration, namely the packet transmission time. The receiver will wait for a time 2t before replying with the acknowledgement signal and then another time 2t for the idle state to begin. If the receiving station 11 detects any activity on the channel 10 during the first waiting period, at the end of the packet-being-transmitted state, it will not send the acknowledgement signal. If the transmitting station 11 detects any channel activity during the first waiting period following the transmission of a packet 12, it will ignore any acknowledgement signal on the channel during the following ACK WAIT state.

With the conditions described above, it can be demonstrated that the channel state machine of each station 11 in the network will be synchronized within a time t of all other station channel state machines, and that a transmitting station 11 will receive a valid ACK signal only if the intended receiver has correctly received the packet.

Detailed description of the invention

A resident computer in each station is coupled to the channel 10 by the interface of the present invention. Received packets 12 and packets 12 to be transmitted are transferred between the interface and resident computer across a single-byte input/output port P, as described below. An interrupt request signal and two reset signals complete with interface to the resident computer. Operations that can be performed on the interface P are Reset, Read Status, Load Packet, and Unload Packet.

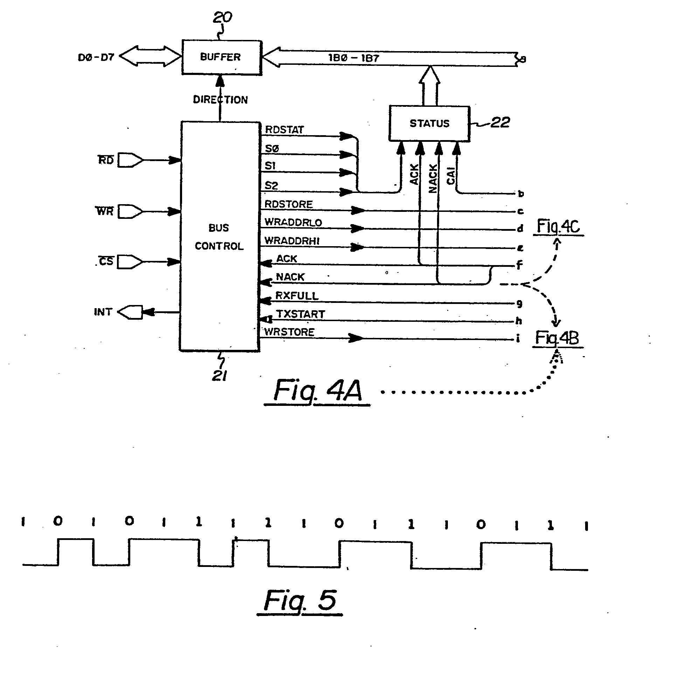

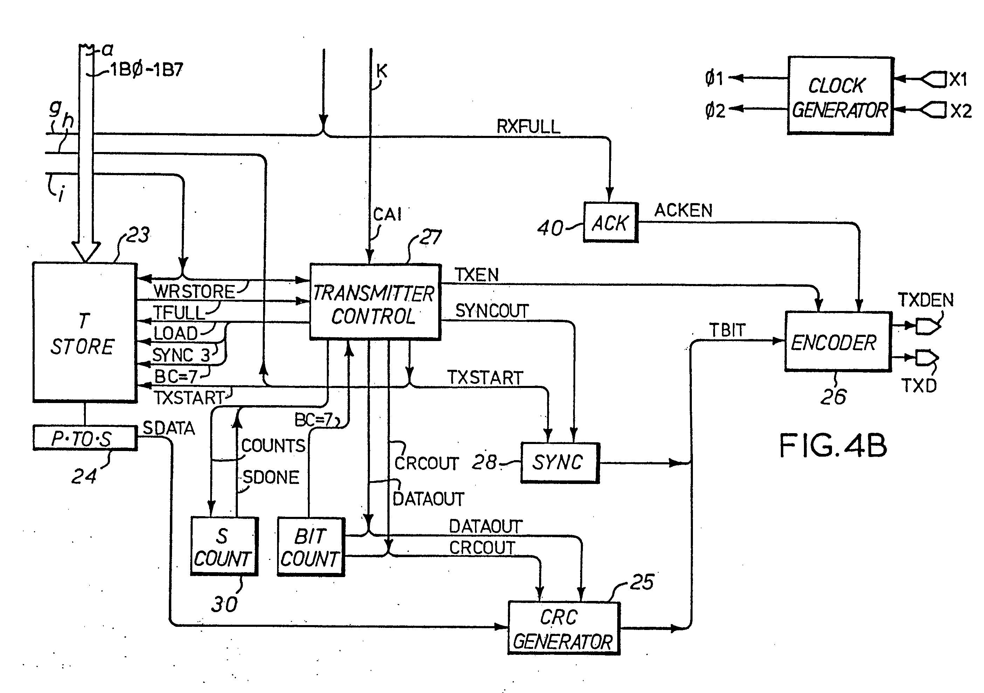

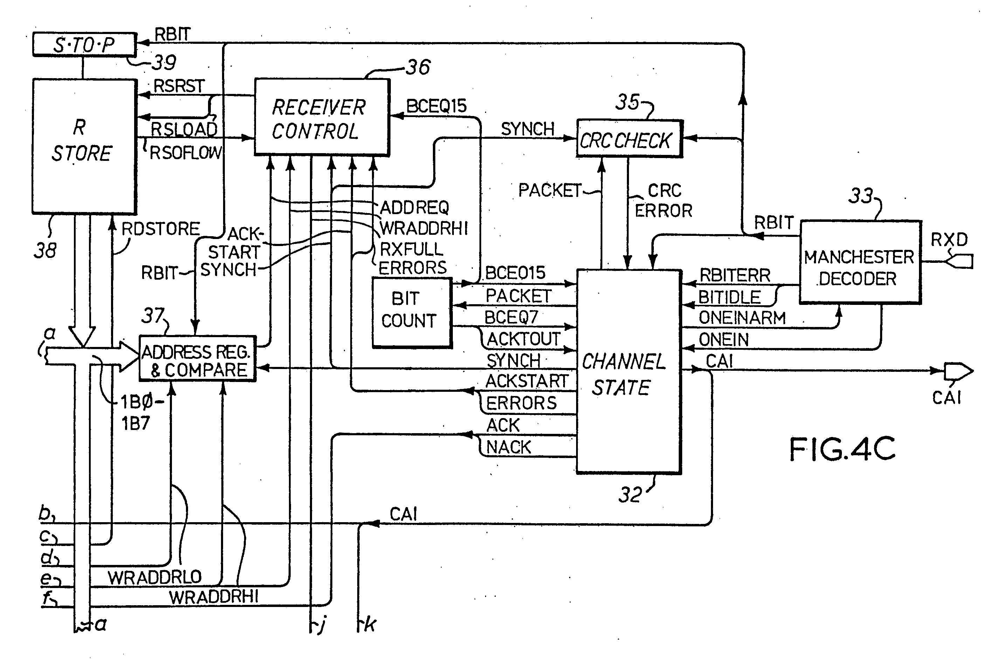

The interface between the resident computer and the channel is illustrated in Figures 4A, 4B and 4C. The interface communicates with the resident computer through a set of signals consisting of read $\overline{RD}$, write $\overline{WR}$, circuit select $\overline{CS}$, interrupt request, $\overline{INT}$, and an 8-bit data bus. The transmitter loads packets 12 from the resident computer and transmits them over the channel 10 according to the transmission algorithm described above. The receiver receives packets 12 from the channel 10 and unloads them to the resident computer. The tasks of CRC generation and checking, line monitoring and data encoding are done by the interface and not by the resident computer. Since the receiver and transmitter are independent, they can both be active at the same time, as when the transmitter is sending a packet while the receiver is unloading a different packet to the resident computer.

In Figure 4A, data is transferred between the resident computer and interface by way of port P which comprises buffer 20 and bus control 21. Data bus buffer 20 is a bidirectional buffer for the 8 data signals which comprise the input/output port P. The data transfer depends upon the states of the read $\overline{RD}$, write $\overline{WR}$, and circuit select $\overline{CS}$ signals to the bus control 21.

Status register 22 contains bits to indicate the state of the interface and the channel in the following manner:

| Bit | Status |
|---|---|
| 0 | Transmission complete, ACK received (reset when status byte is read) |
| 1 | Transmission complete, no ACK received (reset when status byte is read) |
| 2 | Correct packet received (reset when status byte is read) |
| 3 | Not used |
| 4 | Not used |
| 5 | Channel activity indicator (1 when channel is busy; 0 when channel is idle) |
| 6 | An ACK signal was detected on the channel, indicating a good packet transmission (reset when status byte is read) |
| 7 | Bad data on channel. A bad packet, a collision, or noise was detected on the channel. (reset when status byte is read). |

Bus control 21 responds to the $\overline{RD}$ and $\overline{CS}$ signals with a read operation and the $\overline{WR}$ and $\overline{CS}$ signals with a write operation. Bus control 21 maintains a simple state machine to determine the source (or destination) of the read or write operations. Possible sources of read data are status register 22 and receiver store 38. Destinations for written data are address register 37 and transmitter store 23.

In Figure 4B, transmitter store 23 holds a packet 12 of data to be transmitted. It is a FIFO store of 134 bytes (132 for data and 2 for the destination address). Data to be transmitted leaves the transmitter store 23 by way of parallel to serial buffer 24. Data transmission is controlled by transmitter control 27 which initiates a packet transmission employing the transmission algorithm described above and in accordance with the value from S count unit 30. S count unit 30 is comprised of a counter driven by a random clock (neither of

which is shown). Transmitter control 27 also synchronizes the other parts of the transmitter to ensure packet transmission.

CRC generator 25 builds the CRC code of the packet being transmitted as data in transmitter store 23 is being transmitted. When transmitter store 23 becomes empty, the resultant CRC is transmitted. As was indicated above, the first field of the packet is a four bit SYNC code which is generated by SYNC generator 28.

The packet 12 being transmitted passes through encoder 26 which encodes each bit in a Manchester code before transmission. The four sources of data to be transmitted (as indicated above) are the SYNC code 28, the transmitter store 23 (for destination address and data), the CRC generator 25, and the acknowledgement code 40. The output select decides which of these, if any, is to be sent.

As was indicated above, the three possible channel states (idle, packet-being-transmitted, and acknowledgement period) are maintained in channel state machine 32 of Figure 4C for use by both the transmitter and receiver. A timer is required for each change of state. A timer is also used by the transmitter in the delay portion of the transmission algorithm as described above. Input decoder 33 is a Manchester decoder which receives data from the channel. It thus converts the Manchester encoded data into unencoded data. The SYNC code can also be recognized at this point and separated from the data. CRC check 35 is the opposite of CRC generator 25 and serves to verify the correctness of the incoming data.

Receiver store 38 buffers a packet 12 received from the channel 10 to be read by the resident computer. The data enters the receiver store 38 by way of serial to parallel buffer 39. Receiver control 36 synchronizes the parts of the receiver in an order to ensure correct packet reception.

On Reset, the interface is loaded from the resident computer with its address. Thereafter, when a packet 12 is detected on the channel 10, and receiver store 38 is empty, address compare logic 37 checks to see if the packet 12 is intended for the resident computer by comparing the incoming address against the stored address.

Manchester encoding is employed to send data with an embedded clock and no DC bias. It is characterized by always having a transition during the middle of a bit interval as illustrated in Figure 5. A logic zero is a positive going transition while a logic one is a negative going transition.

Interface operation

As was indicated above, the operations that can be performed on the terminal interface are Reset, Read Status, Load Packet and Unload Packet. These operations will now be described.

Reset. The Reset operation is the operation of initializing the interface. The interface is set to the initial state by asserting either of the two reset signals, one of which is used for the power-up reset and the other of which is used for programmatic reset. Resetting the interface clears the status register 22 and sets it to zero. When the interface is reset, the resident computer must output the node's unique address as two bytes to port P. This address is used by the receiver to compare with destination address fields of packets being transmitted by other nodes.

The interface cannot receive or transmit packets until it loads this address from the resident computer.

Read Status. The interface maintains status register 22 of Figure 4A which can be read from port P any time except during the unload packet operation. The resident computer should respond to an interrupt by reading the status register from port P. Depending on which of the bits are set, the resident computer may decide to initiate a load packet or unload packet operation. Reading the status register causes the first three bits of the status register 22 to be reset and consequently resets the interrupt request signal $\overline{INT}$ to the resident computer. If the interrupt was requested because of the completed transmission, the interrupt signal $\overline{INT}$ may be reasserted immediately as the result of a received packet 12. If the interrupt was requested due to a received packet 12, the interrupt signal $\overline{INT}$ will not be reasserted until after the entire packet 12 is unloaded from the interface.

Load Packet. The load packet operation causes the interface to be loaded with a packet 12 to be transmitted on the channel 10. A packet 12 cannot be loaded when another packet 12 is in the process of being transmitted. The resident computer loads the packet 12 by simply sending two destination address bytes to port P followed by 132 data bytes. As soon as the interface has loaded the 134 bytes from the resident computer, it begins transmitting the packet 12 on the channel 10 according to the algorithm described above. After transmission of the packet 12, when the channel 10 returns to the idle state, the interface requests an interrupt by setting the appropriate bit of the status register 22.

Unload Packet. The resident computer performs an unload operation with 134 successive read operations of port P, transferring the two-byte destination address (the resident computer's address) followed by 132 bytes of data from the interface to the resident computer. It should be noted that if two packets 12 are sent to the same destination, and the second packet 12 arrives before the first packet 12 has been completely unloaded from the interface, the second packet 12 is not acknowledged and must be retransmitted. Similarly, if a packet 12 is received incorrectly, it must also be retransmitted. In either case, the destination's resident computer will not be informed of the lost or bad packet 12 and the sender will not receive an acknowledgement signal.

Epiloque

A data communication network has been disclosed which does not require a master controller to control the transmission between nodes in the network. Each station 11 initiates transmission a random time after the channel 10 is determined to be idle. Should two or more stations 11 initiate transmission at the same time, transmission will continue, however each station 11 will again seek to initiate transmission after a random period of time. The delay between attempts to initiate transmission varies from station 11 to station 11 according to the random times generated from station 11 to station 11. In this way, contention conflicts between stations 11 is minimized without unduly restricting communication between stations 11.

## Claims

1. A data communication network comprising a plurality of stations (11) in contention for a common communication channel (10) each to transmit a respective data packet (12), each of said plurality of stations (11) being operable to monitor said channel (10) for activity, to be inhibited from transmission of said respective data packet (12) when said channel (10) is active, upon detection of cessation of activity on said channel (10) to delay for a randomly selected time period (s) before attempting to transmit said respective data packet (12) on said channel (10) and to be inhibited from attempting to transmit said respective data packet (12) on said channel (10) if said channel (10) should become active before the elapse of said randomly selected time period (s), said network being characterized by said each station (11), on each instance of detection of cessation of activity on said channel (10), being operable to select a different value for said randomly selected time period (s) uniformly distributed over a predetermined range (O to S) for each of said plurality of stations (11) in said network to have, on average, an equiprobable chance to be the first station (11) to gain access to said channel (10) after detection of cessation of activity thereon.

2. A network according to Claim 1 wherein said activity on said channel (10) comprises a packet (12) transmission period (PACKET BEING TRANSMITTED) followed by an acknowledgement period, wherein said each of said stations (11) comprises a receiver (38, 37, 36, 35, 33) for receiving a respective data packet (12) from any other one of said plurality of stations (11), an address comparator (37) in said receiver for comparing an address portion (Destination Address) of said packet (12) with a selectably loaded address and for providing indication when said respective packet (12) from said any other station (11) is intended for said each station (11), and an acknowledgement transmitter (40, 26) for providing an acknowledgement message on said common channel (10) in the event of a respective packet (12) from said any other station (11) intended for said each station (11) has been correctly received, said each station (11) when in receipt of a respective packet (12) being operable at the termination of said packet (12) transmission period (PACKET BEING TRANSMITTED) to wait for a predetermined period equal to twice the maximum transmission delay (t) between any two stations (11) on said channel (10) before providing said acknowledgement message for provision to said any other station (11) wherefrom said respective packet (12) is received.

3. A network according to Claim 2 wherein said each station (11), in the event of having transmitted a respective packet (12) on said channel (10) is operable to monitor said channel (10) for said acknowledgement message and is operable to provide indication (ACK, NACK) whether or not said acknowledgement is received within said acknowledgement period.

4. A network according to any of the preceding claims wherein said each station (11) comprises a transmission store (23) for receiving a packet (12) for transmission on said channel (10) and a reception store (38) for holding a packet (12) received from said channel (10) where said packet (12) in said transmission store (23) is transmittable on said channel (10) simultaneously with the rendering up of said packet (12) in said reception store (38).

5. A network according to any of the preceding claims wherein said packet (12) comprises a data synchronizing portion (SYNC) at the commencement thereof and an error detection portion (CRC) at the termination thereof.

6. A network according to Claim 2 wherein said selectably loaded address (in 37) is provided to said each station (11) by a respective host computer, said each station (11) providing an interface between said network and said respective host computer.

7. A network according to any of the preceding claims wherein said predetermined range (O to S) for said randomly selected time period (s) is the range from zero to $10^8$ divided by the Baud rate of said channel (10).

## Patentansprüche

1. Datenkommunikationsnetzwerk mit mehreren Stationen (11), die im Konkurrenzbetrieb auf einem gemeinsamen Kommunikationskanal (10) arbeiten und von denen jede ein entsprechendes Datenpaket (12) senden kann, wobei jede der mehreren Stationen (11) die Aktivität des Kanals (10) überwacht und an einer Übertragung des entsprechenden Datenpakets (12) gehindert ist, wenn der Kanal (10) aktiviert ist und bei Feststellung der Beendigung der Aktivität des Kanals (10) eine Übertragung des entsprechenden Datenpakets (12) auf den Kanal (10) um eine wahlfrei gewählte Zeitperiode (s) verzögert und an dem Versuch einer Übertragung des entsprechenden Datenpakets (12) auf den Kanal (10) gehinder ist, wenn der Kanal (10) aktiviert wird, bevor die wahlfrei gewählte Zeitperiode (s) abgelaufen ist, dadurch gekennzeichnet, daß jede Station (11) in jedem Fall der Erfassung der Beendigung der Aktivität auf dem Kanal (10) einen unterschiedlichen Wert der wahlfrei gewählten Zeitperiode (s) auswählt, der gleichmäßig über einen vorbestimmten Bereich (O—S) für jede der mehreren Stationen (11) in dem Netzwerk verteilt ist, um im Mittel mit gleicher Wahrscheinlichkeit die erste Station (11) zu sein, die Zugriff zum Kanal (10) nach der Erfassung der Beendigung der Aktivität auf dem Kanal (10) erhält.

2. Kommunikationsnetzwerk nach Anspruch 1, dadurch gekennzeichnet, daß die Aktivität auf dem Kanal (10) eine Datenpaketübertragungsperiode (PACKET BEING TRANSMITTED) enthält, der eine Bestätigungsperiode folgt, daß jede der Stationen (11) einen Empfänger (38, 37, 36, 35, 33), der ein entsprechendes Datenpaket (12) von einer beliebigen anderen der mehreren Stationen (11) empfängt, einen Adressenkomparator (37) im Empfänger zum Vergleich eines Adressenabschnittes (Destination Address), des Datenpakets (12) mit einer selektiv geladenen Adresse und zur Anzeige, wenn das betreffende Datenpaket (12) von der anderen Station (11) für die betreffende Station (11) bestimmt ist, und einen Bestätigungssender (40, 26) enthält, der eine Bestätigungsnachricht an den gemeinsamen Kanal (10) abgibt, wenn ein entsprechendes Datenpaket (12) von der anderen Station, das für die betreffende Station (1) bestimmt war, korrekt empfangen wurde, und daß jede Station (11) beim Empfang eines entsprechenden Datenpakets (12) mit dem Ablauf der Datenpaketübertragungsperiode (PACKET BEING TRANS-MITTED) eine vorbestimmte Periode, die gleich der zweifachen maximalen Übertragungsverzögerung (p) auf dem Kanal (10) zwischen beliebigen zwei Stationen (11) ist, wartet, bevor sie die Bestätigungsnachricht an die andere Station (11) abgibt, von der sie das entsprechende Datenpaket (12) empfangen hat.

3. Kommunikationsnetzwerk nach Anspruch 2, dadurch gekennzeichnet, daß die betreffende Station (11) nach der Übertragung eines entsprechenden Datenpakets auf den Kanal (10) den Kanal (10) auf die Bestätigungsnachricht überwacht und eine Anzeige (ACK, NACK) abgibt, ob die Bestätigung innerhalb der Bestätigungsperiode empfangen wurde oder nicht.

4. Kommunikationsnetzwerk nach einem der vorstehenden Ansprüche, dadurch gekennzeichnet, daß jede Station einen Senderspeicher (23) zur Aufnahme eines Datenpakets (12) zur Übertragung auf dem Kanal (10) und einen Empfangsspeicher (38) zum Zwischenspeichern eines vom Kanal (10) empfangenen Datenpakets (12) enthält, wobei das im Senderspeicher (23) enthaltene Datenpaket (12) auf den Kanal (10) gleichzeitig übertragbar ist mit der Wiedergabe des im Empfangsspeicher (38) enthaltenen Datenpakets (12).

5. Kommunikationsnetzwerk nach einem der vorstehenden Ansprüche, dadurch gekennzeichnet, daß das Datenpaket (12) am Anfang einen Datensynchronisationsabschitt (SYNC) und am Ende einen Fehlererkennungsabschnitt (CRC) enthält.

6. Kommunikationsnetzwerk nach Anspruch 2, dadurch gekennzeichnet, daß die selektiv geladene Adresse (in 37) mittels eines Wirtsrechners an die betreffende Station (11) abgegeben wird, wobei die betreffende Station (11) eine Schnittstelle zwischen dem Netzwerk und dem betreffenden Wirtsrechner bildet.

7. Kommunikationsnetzwerk nach einem der vorstehenden Ansprüche, dadurch gekennzeichnet, daß der vorbestimmte Bereich (O bis S) der wahlfrei gewählten Zeitperiode (s) im Bereich zwischen 0 bis $10^8$ geteilt durch die Übertragungsgeschwindigkeit in Baud des Kanals (10) liegt.

**Revendications**

1. Réseau de communication de données comportant un ensemble de postes (11) en contention pour un canal de communication commun (10) de façon que chacun transmette un paquet de données (12), respectif, chacun de l'ensemble des postes (11) pouvant fonctionner de façon à contrôler l'activité du canal (10), de façon à être interdit en transmission du paquet de données respectif (12) lorsque le canal (10) est actif lors de la détection de l'arrêt de l'activité sur le canal (10) pour retarder pendant une période de temps (s) choisie de façon aléatoire, avant de tenter de transmettre le paquet de données respectif (12) sur le canal (10) et de façon à être interdit de tenter de transmettre le paque de données respectif (12) sur le canal (10) si le canal (10) doit être mis en oeuvre avant la fin de la période de temps (s) choisie de façon aléatoire, ce réseau étant caractérisé en ce que chaque poste (11) lors de chaque détection de la cessation d'activité sur le canal (10), peut être mis en oeuvre pour choisir une valeur différente de la période de temps (s) choisie de façon aléatoire, distribuée uniformément dans une plage prédéterminée (O à S) pour chaque ensemble de postes (11) du réseau de façon à présenter une chance moyenne, réciproque au premier poste (11), à accéder au canal (10) après la détection de la cessation d'activité sur celui-ci.

2. Réseau selon la revendication 1, caractérisé en ce que l'activité sur le canal (10) se compose d'un paquet (12) de périodes de transmission (PAQUET EN COURS DE TRANSMISSION) suivi par une période d'accusé de réception, chacun des postes (11) comportant un récepteur (38, 37, 36, 35, 33) pour recevoir un paquet de données respectif (12) de l'un quelconque des différentes postes (11), un comparateur d'adresses (37) dans le récepteur pour comparer une partie d'adresse (adresse de destination) du paquet (12) avec une adresse chargée de façon sélective et pour fournir une indication relative au paquet respectif (12) de l'une quelconque des autres postes (11) prévus pour chaque poste (11) et un transmetteur d'accusé de réception (40, 26) donnant un message d'accusé de réception sur le canal commun (10) au cas où un paquet respectif (12) de l'un des autres postes (11) prévus pour chaque poste (11) a été reçu correctement, chaque poste (11) à la réception d'un paquet respectif (12) pouvant être mis en oeuvre à la fin de la période de transmission du paquet (12) (PAQUET EN COURS DE TRANSMISSION) pour attendre une période prédéterminée égale au double du retard de transmission maximum (t) entre n'importe quels deux postes (11) sur le canal (10) avant de fournir le message d'accusé de réception à l'un des autres postes (11), d'où est reçu le paquet respectif (12).

3. Réseau selon la revendication 2, caractérisé en ce que chaque poste (11) dans le cas où il a transmis un paquet respectif (12) sur le canal (10) est susceptible d'être mis en oeuvre pour contrôler le canal (10) quant à un message d'accusé de réception et d'être mis en oeuvre pour fournir une indication (ACK, NACK) si un accusé de réception a été ou non reçu dans la période d'accusé de réception.

4. Réseau selon l'une quelconque des revendications précédentes, caractérisé en ce que chaque poste (11) se compose d'un moyen d'enregistrement de transmission (23) pour recevoir un paquet (12) pour la transmission sur le canal (10) et un moyen d'enregistrement de réception (38) pour conserver un paquet (12) reçu du canal (10), le paquet (12) du moyen d'enregistrement de transmission (23) pouvant être transmis dans le canal (10) simultanément avec le renvoi du paquet (12) dans le moyen d'enregistrement de réception (38).

5. Réseau selon l'une quelconque des revendications précédentes, caractérisé en ce que le paquet (12) se compose d'une partie de synchronisation de données (SYNC) du début correspondant et d'une partie de détection d'erreur (CRC) correspondant à la fin.

6. Réseau selon la revendication 2, caractérisé en ce que l'adresse chargée de façon sélective (dans 37) est fournie à chaque poste (11) par un ordinateur-hôte respectif, chaque poste (11) assurant un interface entre le réseau et l'ordinateur-hôte respectifs.

7. Réseau selon l'une quelconque des revendications précédentes, caractérisé en ce que la plage prédéterminée (entre O et S) pour la période de temps (s) choisie de façon aléatoire est la plage comprise entre zéro et $10^8$ divisée par la vitesse Baudot du canal (10).

FIG.IA

FIG.IB

| SYNC | Destination Address | Data | CRC |
|------|---------------------|------|-----|

FIG.2

RESET

IDLE
WAIT

*Idle for*
*1 Packet Period*

SYNC
WAIT

*IDLE*

*Sync*

PACKET

*PACKET BEING*
*TRANSMITTED*

ACK
IDLE

*ACKNOWLEDGEMENT*
*PERIOD*

ACK
WAIT

ACK TIME OUT

## Fig. 3A

Fig. 3B

# 0 076 880

Fig. 4A

Fig. 5

4

FIG.4B

FIG.4C

0 076 880